# DEMANDE DE BREVET EUROPEEN

(11) **EP 0 953 502 A1**
(43) Date de publication de la demande: **03.11.1999**
(21) Numéro de dépôt: 99400931.4
(22) Date de dépôt: 16.04.1999
(51) Int. Cl.: B62M 3/08

(54) **Dispositif de fixation rapide d'une chaussure sur une pédale de bicyclette**

(30) Priorité: 27.04.1998 FR 9805236
(71) Demandeur: Look Cycle International, 58000 Nevers (FR)
(72) Inventeur: Landru, Marc, 58000 Nevers (FR); Lachat, Rémy, 58130 St. Martin d'Heuille (FR)
(74) Mandataire: Kaspar, Jean-Georges

(57) **Abrégé**

Le dispositif de fixation rapide comprend une platine fixée à demeure sous la semelle de la chaussure et des moyens de fixation (4, 5) de la platine sur la face supérieure de la pédale, lesdits moyens de fixation comprenant une griffe avant (4) et une griffe arrière (5) montées mobiles dans une direction perpendiculaire à l'axe (2) de la pédale (1), et des moyens de commande (13, 14, 15, 16, 22) des griffes (4, 5). Les moyens de commande (13, 14, 15, 16, 22) comprennent un circuit hydraulique intégré dans la pédale (1) et des organes de commande hydraulique (13, 22) disposés sur la pédale et actionnés par la platine.

## Description

L'invention est relative aux fixations rapides d'une chaussure sur une pédale de bicyclette.

Les fixations connues de ce genre comportent une platine fixée à demeure sous la semelle de la chaussure et des moyens d'accrochage de la platine sur la face supérieure de la pédale. Ces moyens d'accrochage sont généralement constitués d'une griffe avant fixe et une griffe arrière mobile sollicitée en permanence par des moyens élastiques dans le sens de la griffe avant.

La platine a une forme globalement triangulaire avec un sommet dirigé vers l'avant et comporte un évidement avant et un évidement arrière qui avec la surface de la semelle forment une encoche respective dans laquelle la griffe avant respectivement arrière vient s'engager pour fixer la platine avec la chaussure contre la pédale.

Ces fixations comportent des moyens de commande de l'accrochage et du décrochage de la platine. Ces moyens de commande sont constitués par des surfaces inclinées disposées d'une part sur la platine et d'autre part sur la griffe mobile.

Pour l'accrochage, le sommet du triangle formé par la platine définit un bec qui est engagé sous la griffe avant, alors que la platine comporte à sa partie arrière une surface inclinée venant en appui contre une surface d'extrémité également inclinée de la griffe arrière pour faire pivoter celle-ci dans le sens opposé par rapport à la griffe avant afin d'écarter les griffes l'une de l'autre et permettre à la platine de pivoter vers le bas pour que la griffe arrière puisse s'engager dans l'encoche arrière de la platine.

Pour le décrochage, la platine comporte dans l'évidement arrière deux surfaces inclinées opposées qui se trouvent respectivement en contact avec une surface complémentaire de la griffe arrière, ou à proximité de celle-ci, lorsque la platine est prise entre les griffes. Une légère rotation latérale de la platine fait qu'en fonction du sens de rotation, l'une ou l'autre des surfaces inclinées repousse la griffe arrière pour l'écarter de la griffe avant pour ainsi libérer la platine de sa prise entre les griffes.

L'invention a pour but de proposer une fixation d'un tout nouveau genre qui permet à l'utilisateur de se placer rapidement et facilement dans sa position naturelle sans avoir à régler la platine sous la chaussure tout en permettant un serrage très progressif de la platine entre les griffes avant et arrière. La fixation suivant l'invention permet ainsi l'accrochage de la platine sur la pédale sans immédiatement bloquer le pied puisque l'utilisateur peut légèrement bouger celui-ci de façon latérale ou angulaire sans déchausser, ce qui permet à l'utilisateur de trouver une position naturelle qui lui convient.

L'invention a pour objet un dispositif de fixation rapide d'une chaussure sur une pédale de bicyclette, comprenant une platine fixée à demeure sous la semelle de la chaussure et des moyens de fixation de la platine sur la face supérieure de la pédale, lesdits moyens de fixation comprenant une griffe avant et une griffe arrière, au moins la griffe arrière étant montée mobile dans une direction perpendiculaire à l'axe de la pédale, et des moyens de commande des moyens de fixation, caractérisé en ce que lesdits moyens de commande comprennent un circuit hydraulique intégré dans la pédale et des organes de commande hydraulique disposés sur la pédale et actionnés par la platine.

Selon d'autres caractéristiques de l'invention :
- les organes de commande comprennent un vérin principal actionné par la face inférieure de la platine, le vérin principal étant relié à un réservoir de liquide hydraulique par un conduit d'aspiration d'une part et par un conduit de retour d'autre part, le vérin principal étant relié par conduit à au moins un organe de commande de la fixation constitué par un vérin de serrage de la griffe mobile, le conduit comportant une dérivation débouchant dans un accumulateur de pression ;
- le vérin principal est en outre relié par un conduit à un organe de commande de la fixation constitué par au moins un vérin d'accrochage de la griffe mobile, le conduit comportant une dérivation débouchant dans un accumulateur de pression à précontrainte ;
- la section du conduit relié au vérin d'accrochage est plus importante que celle du conduit relié au vérin de serrage afin de permettre au vérin d'accrochage d'être actionné en premier ;
- chaque conduit relié au vérin principal comporte respectivement un clapet antiretour ;
- un organe de commande hydraulique de la libération de la platine est disposé sur la face supérieure de la pédale et actionné par un appendice latéral de la pédale ;
- l'organe de commande de la libération de la platine est constitué par un tiroir ayant une position ouverte et une position fermée, ce tiroir étant relié à une dérivation du conduit relié au vérin d'accrochage et à une dérivation du conduit relié au vérin de serrage d'une part, et au réservoir d'autre part afin de permettre, lorsqu'il est en position ouverte, d'établir la communication des desdits conduits avec le réservoir ;
- la griffe avant est également montée mobile et commandée par des moyens hydrauliques analogues à ceux qui commandent la griffe arrière et qui sont intégrés dans le même circuit hydraulique que ces derniers ;
- le conduit reliant le vérin principal au vérin ou aux vérins de serrage est en outre relié au réservoir par une dérivation dans laquelle est inséré un étranglement ;
- la ou les griffes mobiles sont constamment sollicitées par des moyens élastiques pour s'écarter l'une de l'autre ;
- la griffe mobile comporte un levier s'étendant sensiblement perpendiculairement au corps de la griffe et coopérant avec un ou deux vérins de commande du rapprochement des griffes l'une de l'autre en vue de la fixation de la platine sur la pédale ;
- le vérin principal est constitué par un dôme gonfleur en un matériau élastique ;
- les vérins constituant les organes de commande de la fixation sont constitués par des membranes ;
- le circuit hydraulique alimente en outre un palier hydrostatique dans lequel l'axe de pédale est logé ;
- le palier hydrostatique est inséré dans le conduit de retour vers le réservoir ;
- un accumulateur de pression est connecté en amont du palier hydrostatique ;
- la dérivation avec l'étranglement est relié au palier hydrostatique.

D'autres caractéristiques et avantages de l'invention vont ressortir de la description qui va suivre en se référant aux dessins annexés qui représentent à titre d'exemple un mode de réalisation de la fixation suivant l'invention. Sur les dessins :
- la figure 1 est une vue en perspective montrant une platine et une pédale suivant l'invention ;
- les figures 2 et 3 sont des coupes axiales d'une platine et d'une pédale, montrant respectivement la position de la platine au début de l'accrochage de celle-ci sur la pédale et la position de la platine lorsqu'elle est serrée entre les deux griffes ;
- les figures 4 et 5 sont des vues de dessus d'une platine et d'une pédale, montrant respectivement la position de la platine lorsqu'elle est serrée entre les deux griffes et la platine lors du décrochage de celle-ci ;
- la figure 6 montre schématiquement le circuit hydraulique selon l'invention dans une phase de repos ;
- la figure 7 montre schématiquement le circuit hydraulique dans une phase d'accrochage de la platine sur la pédale ;
- la figure 8 montre schématiquement le circuit hydraulique dans une phase d'aspiration ;
- la figure 9 montre schématiquement le circuit hydraulique dans une phase de serrage de la platine par les griffes ;
- la figure 10 montre schématiquement le circuit hydraulique dans une phase d'actionnement du palier hydraulique de la pédale ;
- la figure 11 montre schématiquement le circuit hydraulique dans une phase de desserrage de la platine ;
- la figure 12 montre schématiquement le circuit hydraulique dans une phase de décrochage de la platine ;
- les figures 13a et 13b montrent respectivement le symbole utilisé sur les figures 6 à 12 et la mise en oeuvre d'un organe du circuit hydraulique ;
- les figures 14a et 14b montrent respectivement le symbole utilisé sur les figures 6 à 12 et la mise en oeuvre d'un organe du circuit hydraulique ;
- les figures 15a et 15b montrent respectivement le symbole utilisé sur les figures 6 à 12 et la mise en oeuvre d'un organe du circuit hydraulique.

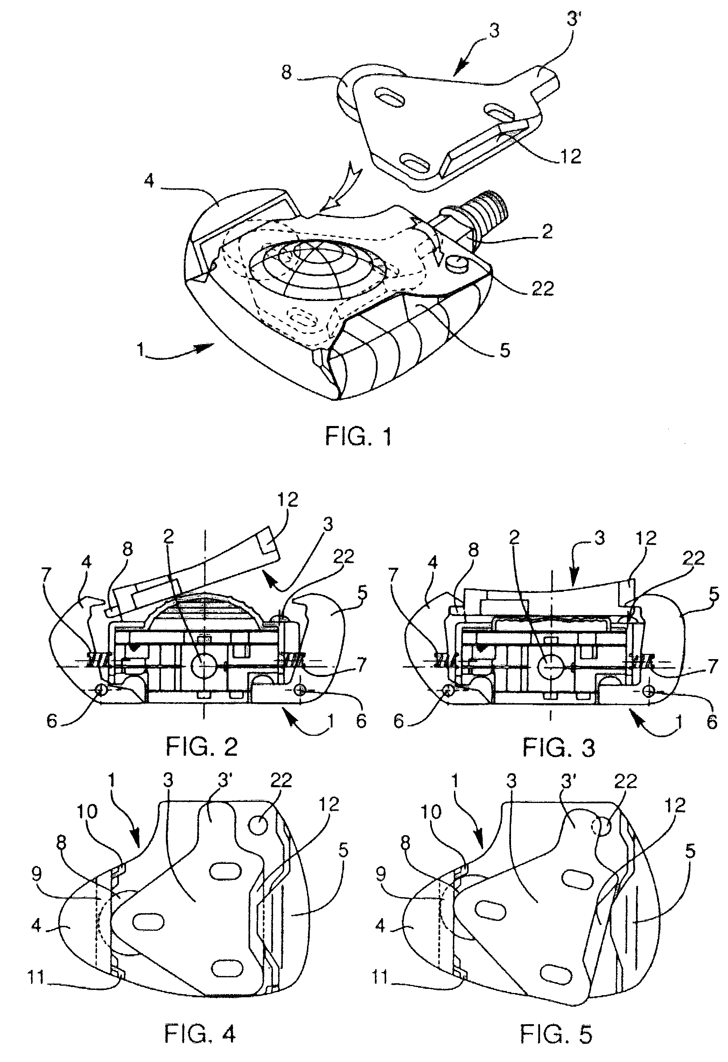

Les figures 1 à 5 montrent une pédale 1 traversée par un axe de rotation transversal 2 au moyen duquel elle est montée, de manière classique en soi, sur la manivelle de pédalier (non représentée). La pédale est pourvue d'un dispositif de fixation d'une chaussure (non représentée) sur la pédale par l'intermédiaire d'une platine 3, elle-même fixée à demeure sous la semelle de la chaussure. La platine 3 est constituée par une plaque mince ayant une forme globalement triangulaire et elle est fixée à la semelle par vissage.

Le dispositif de fixation comporte des moyens d'accrochage de la platine 3 sur la pédale 1, ces moyens comprenant une griffe avant 4 et une griffe arrière 5. Dans l'exemple illustré sur les figures, les deux griffes sont montées pivotantes dans la direction longitudinale de la pédale sur des axes de pivotement respectifs 6 s'étendant dans le sens transversal de la pédale.

Les griffes 4, 5 sont en permanence sollicitées en sens opposés par des moyens élastiques qui dans l'exemple illustré sont constitués par des ressorts hélicoïdaux de pression 7. Par conséquent, lorsque le dispositif de fixation se trouve en état de repos, c'est-à-dire non actionné, les griffes 4, 5 sont maintenues écartées pour faciliter la mise en place de la platine 3 entre celles-ci en vue de son accrochage.

Pour permettre son accrochage, la platine 3 est à son extrémité avant de manière classique pourvue d'un bec 8 destiné à s'engager dans un enfoncement de retenue 9 ménagé à l'extrémité de la griffe avant 4. Le bec 8 a dans l'exemple illustré une forme générale en arc de cercle et son mouvement latéral est limité par des butées latérales 10 et 11 placées sur la face supérieure du corps de pédale. Ces butées sont inclinées vers l'avant de la pédale pour guider et centrer grossièrement la platine 3 lors de sa mise en place sur la pédale 1.

Les butées sont disposées de manière à créer un certain jeu latéral entre elles-mêmes et le contour du bec 8 de la platine. Lors d'une rotation de la platine pour décrocher celle-ci des griffes 4, 5, le bec 8 vient prendre appui contre l'une ou l'autre des butées latérales 10 , 11 en effectuant ce mouvement de rotation autour d'un point de rotation qui sera ainsi légèrement décalé vers le côté.

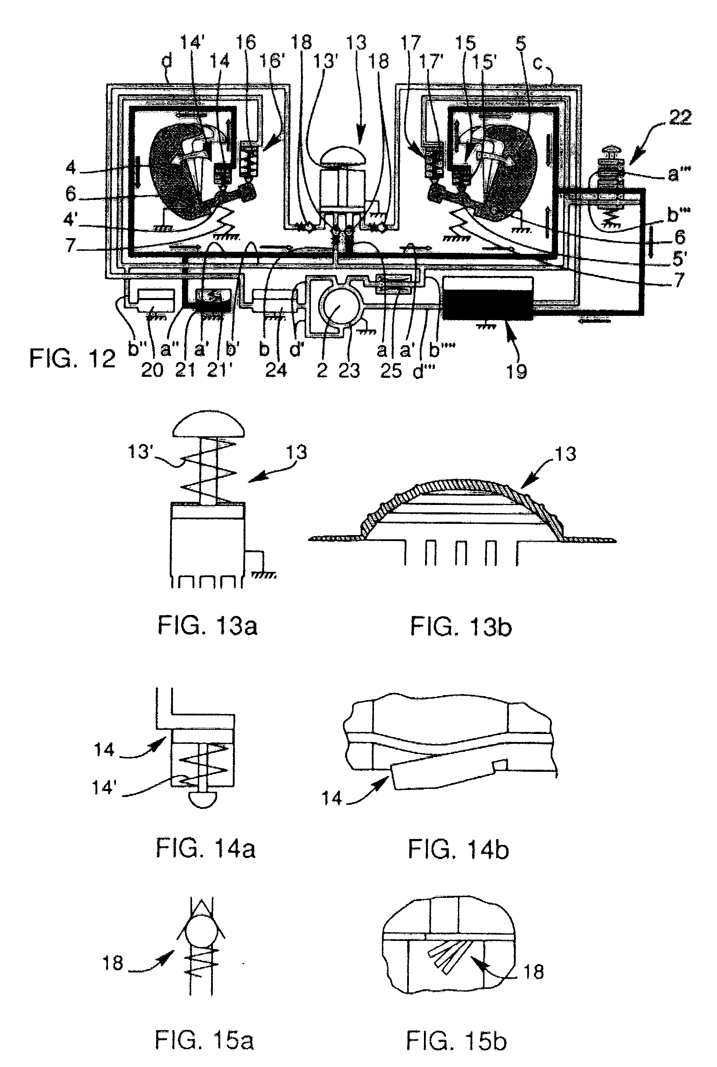

Pour permettre l'accrochage avec la griffe arrière 5, la platine est en outre pourvue d'un évidemment arrière 12 qui définit avec la semelle de la chaussure une encoche de réception de la pointe de la griffe arrière. Cet évidement 12 comporte sur les côtés des surfaces de commande inclinées 12' qui coopèrent de manière connue en soi avec des surfaces complémentaires sur la griffe 5. Ces surfaces de commande sont destinées à permettre un déchaussement d'urgence en écartant de force les griffes avant et arrière 4, 5, ce qui va entraîner dans le circuit hydraulique une réaction qui provoquera l'écartement des griffes comme cela est décrit ci-dessous en référence à la figure 12 (décrochage).

Comme déjà mentionné, les griffes avant et arrière 4, 5 sont maintenues écartées à l'aide de ressorts 7 pour recevoir la platine. La platine est mise en place sur la pédale et ensuite accrochée et serrée sur la pédale à l'aide de moyens hydrauliques qui seront maintenant décrits en détail.

Les moyens de commande de l'accrochage et du décrochage de la platine 3 sur la pédale 1 comprennent un circuit hydraulique intégré dans la pédale et des organes de commande hydraulique disposés sur la pédale et actionnés par la platine.

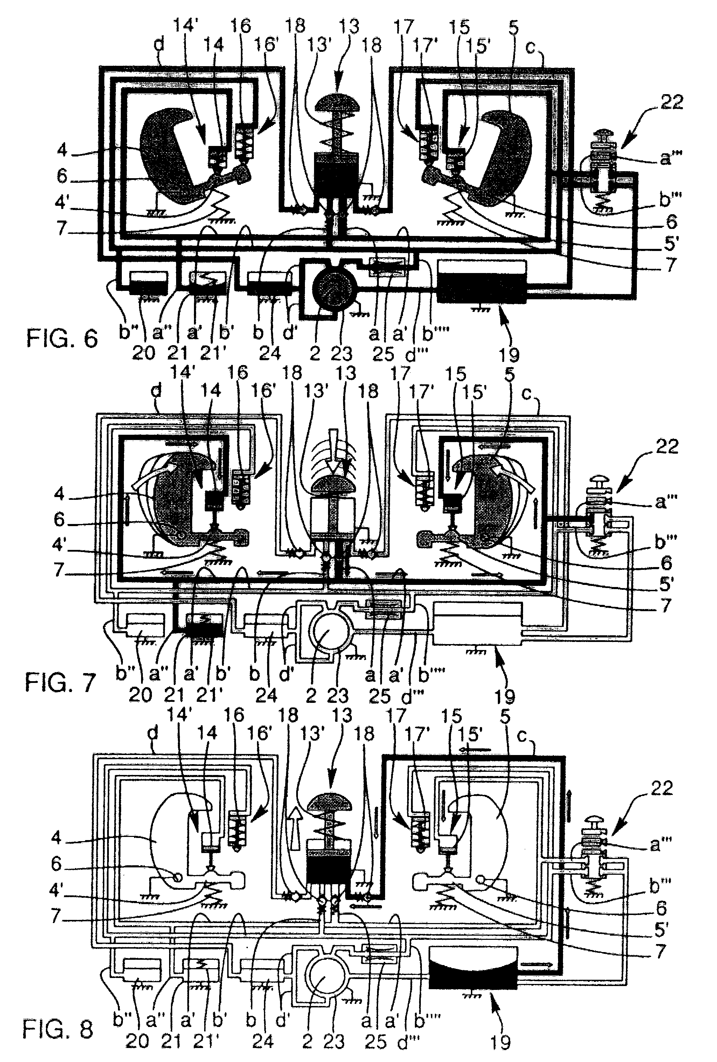

La structure et le fonctionnement de ce circuit hydraulique sont illustrés sur les figures 6 à 12. Sur l'ensemble des figures 7 à 12, les conduits utilisés pendant la phase correspondante sont indiqués en noir et les pièces mobiles alors actionnées sont indiquées en gris. Le liquide hydraulique est une huile supposée incompressible par sa nature.

La figure 6 montre le circuit hydraulique en phase de repos ou en attente de la platine 3 devant être serrée sur la pédale 1. Le circuit comprend un organe de commande 13 de l'accrochage et du serrage de la platine 3 sur la pédale 1. L'organe de commande 13 est constitué par un vérin principal dont le piston est constamment sollicité vers l'extérieur par un organe élastique 13'. Ce premier organe est actionné par la grande face inférieure de la platine 3 lorsque celle-ci est mise en place sur la pédale.

Le vérin principal 13 est par l'intermédiaire d'un conduit «a», «a'» relié à un vérin d'accrochage respectif 14, 15 de la griffe avant et arrière 4, 5. L'extrémité de la tige de piston de chaque vérin d'accrochage 14, 15 repose contre un levier 4', 5' de la griffe respective 4, 5, ce levier s'étendant sensiblement perpendiculairement au corps de la griffe et il est constamment sollicité vers l'extrémité de la tige de vérin correspondant par le ressort 7 déjà mentionné qui écarte les griffes avant et arrière l'une de l'autre. Le piston de chaque vérin d'accrochage 14, 15 est par ailleurs constamment sollicité vers l'intérieur du vérin par un organe élastique 14', 15'.

Le vérin principal 13 est par l'intermédiaire d'un conduit «b», «b'» relié à un vérin de serrage respectif 16, 17 de la griffe avant et arrière 4, 5. La section du conduit «b» est pour des raisons qui seront expliquées ci-dessous plus petite que celle du conduit «a» et correspond sensiblement à la moitié de cette dernière.

L'extrémité de la tige de piston de chaque vérin de serrage 16, 17 repose tout comme pour les vérins d'accrochage contre le levier 4', 5' de la griffe respective 4, 5, près de l'extrémité du levier. Le piston de chaque vérin de serrage 16, 17 est tout comme pour les vérins d'accrochage constamment sollicité vers l'intérieur du vérin par des moyens élastiques 14', 15'.

Chacun des conduits «a» et «b» est pourvu d'un clapet antiretour 18 empêchant le liquide hydraulique de revenir en arrière vers le vérin principal 13.

Le vérin principal 13 est alimenté à partir d'un réservoir de liquide hydraulique 19 auquel il est relié par un conduit d'alimentation «c» d'une part et par un conduit de retour «d» d'autre part.

Pour maintenir la pression dans les conduits «a'» et «b'», ceux-ci sont par ailleurs pourvus d'une dérivation respective «a"» et «b"» débouchant dans un accumulateur de pression respectif 20 et 21. L'accumulateur 21 est pourvue d'un organe élastique 21' dont la force agit contre le remplissage de l'accumulateur et il faut par conséquent vaincre cette force pour remplir l'accumulateur 21. Cette particularité apporte une précontrainte à l'accumulateur et sa fonction est expliquée ci-dessous en référence à la figure 12.

Aussi bien le conduit «a'» que le conduit «b'» sont reliés au réservoir 19 par un conduit de retour respectif «a'''» et «b'''» dans lequel est inséré un organe de commande de décrochage et de desserrage 22. Cet organe de commande 22 est constitué d'un tiroir à deux positions, à savoir une première dans laquelle il ferme le passage dans les conduits de retour «a'''» et «b'''» vers le réservoir 19 et une deuxième position dans laquelle ce passage est ouvert pour mettre les conduits de retour «a'''» et «b'''» en communication avec le réservoir. Cet organe de commande est actionné par un appendice latéral 3' de la platine qui lorsque cette dernière est pivotée dans son propre plan vient appuyer sur l'organe de commande.

Le circuit hydraulique comprend avantageusement un palier hydrostatique qui porte l'axe de pédale 2 sur un coussin de liquide hydraulique, à la place d'un roulement à billes classique.

Ce palier hydrostatique comporte un logement cylindrique 23 dans lequel l'axe de pédale 2 est maintenu par un coussinet (non représenté) avec un interstice délimité entre la paroi du logement et la surface cylindrique de l'axe. Le logement 23 comporte du côté de la manivelle du pédalier une étanchéité torique (non représenté) à travers laquelle passe l'axe de pédale 2.

Le logement 23 est inséré dans le conduit de retour «d», entre le réservoir 19 et un accumulateur de pression 24. Afin de mieux répartir le liquide hydraulique dans l'interstice entre la paroi du logement 23 et l'axe de pédale 2, le conduit de retour «d» est de préférence immédiatement en amont du logement divisé en aux moins deux branches «d'» débouchant dans l'intérieur du logement à des emplacements régulièrement espacés. Le logement 23 est reliée au réservoir par un conduit «d''» qui constitue le dernier tronçon du conduit de retour «d».

Le conduit «b'» alimentant les vérins de serrage 16, 17 comporte avantageusement une dérivation «b''''» qui le relie au logement 23 par un étranglement 25, ce qui permet au liquide hydraulique de retourner au réservoir 19 en passant par le palier hydrostatique pour le lubrifier.

Les figures 13a, 13b illustrent le symbole utilisé pour désigner le vérin principal respectivement une réalisation de celui-ci. Il est constitué par un dôme gonfleur en caoutchouc ou en un autre matériau souple et élastique.

Les figures 14a, 14b illustrent le symbole utilisé pour désigner un vérin tel que le vérin d'accrochage 14, respectivement une réalisation de celui-ci. Il est constitué par une membrane en caoutchouc.

Les figures 15a, 15b illustrent le symbole utilisé pour désigner un clapet antiretour, respectivement une réalisation de celui-ci, ce clapet étant constitué par une valve en caoutchouc.

Le fonctionnement de la fixation selon l'invention sera maintenant expliqué en référence aux figures 7 à 12.

### 1^{ère} phase : repos (figure 6)

Cette phase est une phase de repos ou de non utilisation lorsque les griffes avant et arrière 4, 5 sont écartées l'une de l'autre pour recevoir la platine en vue de l'accrochage et du serrage de celle-ci contre la pédale.

### 2^{ème} phase : accrochage (figure 7)

Quand l'utilisateur place le bec 8 de la platine 3 sous la pointe de la griffe avant 4 et appuie ensuite avec la face inférieure de la platine contre le dôme 13 faisant fonction de vérin principal, le liquide s'y trouvant sera expulsé, en priorité dans le conduit «a» qui est plus large que le conduit «b», ce qui va provoquer la sortie des tiges de piston des vérins d'accrochage 14, 15. Les griffes avant et arrière 4, 5 se referment alors et la platine est ainsi raccrochée à la pédale, sans être serrée. L'utilisateur peut encore déplacer son pied latéralement dans la limite des deux butées latérales 10, 11 ou effectuer une légère rotation du pied sans sortir de l'accroche des griffes, ce qui lui permet de trouver la meilleure position pour le pied. Une fois les deux pieds accrochés, l'utilisateur commence à pédaler, ce qui entraîne l'oscillation du vérin principal 13.

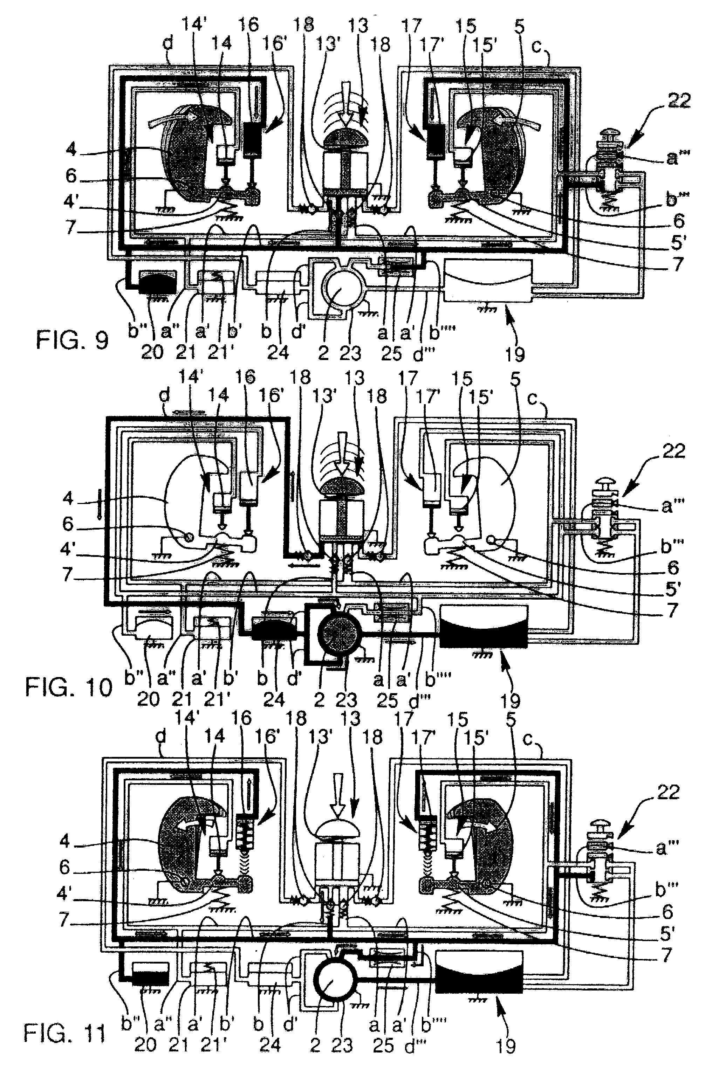

### 3^{ème} phase : aspiration (figure 8)

Quand le piston du vérin principal 13 remonte grâce à l'action de l'organe élastique 13', ici obtenu par l'élasticité innée du dôme, il crée une dépression dans la chambre de vérin. Du liquide hydraulique est alors aspiré du réservoir 19 par le conduit «c» pour remplir la chambre de vérin. Lors de la descente du piston du vérin principal dans le cadre des phases 4 et 5, les clapets antiretour 18 empêchent le liquide de revenir dans la chambre de vérin.

### 4^{ème} phase : serrage (figure 9)

Quand le piston du vérin principal 13 redescend, le conduit «a», déjà alimenté reste sous pression grâce au clapet antiretour 18. C'est donc le conduit «b» qui à son tour est alimenté. Le liquide hydraulique, après avoir rempli l'accumulateur de pression 20 fait sortir progressivement les vérins de serrage 16, 17 au fur et à mesure que l'utilisateur pédale, ceci jusqu'à ce que la platine 3 soit complètement serrée et ne puisse plus bouger. Les pieds de l'utilisateur sont désormais maintenus dans une position naturelle choisie par l'utilisateur.

### 5^{ème} phase : palier hydrostatique (figure 10)

Parallèlement aux phases 2 à 4, le conduit de retour «d» est également alimenté lorsque le piston du vérin principal 13 descend. Le liquide hydraulique est alimenté sous pression dans le logement 23 où il porte l'axe de pédale 2. Ce palier hydrostatique permet de réduire les frottements pendant la phase d'oscillation du piston du vérin principal. L'accumulateur de pression 24 permet de maintenir constamment le palier en pression. Au démarrage et au ralenti, le coussinet de l'axe de pédale assure seul le guidage en rotation de l'axe mais reste lubrifié par le liquide hydraulique. Comme déjà mentionné, un conduit «d'''» permet au liquide hydraulique dans le palier de retourner dans le réservoir 19.

### 6^{ème} phase : desserrage (figure 11)

Quand l'utilisateur cesse de pédaler, le conduit «b» se purge. L'étranglement 25 permet au liquide de retourner au réservoir 19 en passant par le palier hydrostatique pour le lubrifier. Comme suite à la chute de pression dans le conduit «b», les pistons des vérins de serrage 16, 17 vont sous l'effet de l'action des organes élastiques respectifs 16', 17' progressivement rentrer dans leur position rétractée, ce qui entraîne le desserrage des griffes avant et arrière 4, 5. Cependant, les griffes ne s'ouvrent pas complètement puisque les vérins d'accrochage 14, 15 connectés au conduit «a» restent sous pression. L'utilisateur peut alors à nouveau bouger son pied pour par exemple le repositionner et repartir.

### 7^{ème} phase : décrochage (figure 12)

Pour se décrocher, l'utilisateur n'a alors qu'à faire pivoter le pied vers l'extérieur de 10 à 15° pour ainsi actionner l'organe de commande 22 constitué par un tiroir. Le liquide dans les conduits «a» et «b» vont alors rapidement retourner au réservoir 19 par les conduits de dérivation «a'''» respectivement «b'''», ce qui provoque la rentrée brutale des tiges de piston des vérins d'accrochage 14 et 15 sous l'effet de l'action des organes élastiques respectifs 14' et 15'. Les griffes avant et arrière 4, 5 s'écartent alors sous l'effet de l'action des ressorts de rappel respectifs 7 pour ainsi libérer entièrement la platine 3 et le pied peut déchausser.

Il est par ailleurs à noter que l'accumulateur de pression 20 a été inséré dans le conduit «a» pour des raisons de sécurité. En effet, en cas de déchaussement d'urgence provoqué, l'utilisateur peut, tout en se trouvant en phase 4 de serrage, en fournissant un effort important latéral écarter les griffes 4, 5 l'une de l'autre pour ainsi libérer, de manière classique en soi, la platine 3 de sa prise. On suppose dans ce cas que la phase 6 s'effectue pratiquement simultanément à partir du moment où l'utilisateur cesse de pédaler.

Un tel déchaussement peut aussi être déclenché par une chute pendant laquelle la plante du pied est tournée vers l'extérieur ou vers l'intérieur.

Il est évident que des modifications peuvent être apportées au mode de réalisation de la fixation décrit ci-dessus sans pour autant sortir du cadre de l'invention. Dans le mode de réalisation décrit, aussi bien la griffe arrière que la griffe avant sont mobiles, alors qu'il est bien entendu possible de prévoir un mode de réalisation dans lequel seule la griffe arrière est mobile comme cela est le cas dans les fixations rapides classiques.

Dans une variante non représentée sur les figures, les vérins d'accrochage 14, 15 ont été supprimés et seuls les vérins de serrage assurent la fixation de la platine contre la pédale.

Des études ont par ailleurs montré que le poids d'une pédale pourvue de la fixation à circuit hydraulique selon l'invention est du même ordre de grandeur que celui des pédales automatiques existantes.

Est ainsi obtenue un dispositif de fixation sûr d'une excellente sécurité qui présente l'avantage de faciliter la mise en place de la platine sur la pédale et l'ajustage de la position de celle-ci lors de l'accrochage, avant le serrage proprement dit.

## Revendications

1. Dispositif de fixation rapide d'une chaussure sur une pédale (1) de bicyclette, comprenant une platine (3) fixée à demeure sous la semelle de la chaussure et des moyens de fixation (4, 5) de la platine sur la face supérieure de la pédale, lesdits moyens de fixation comprenant une griffe avant (4) et une griffe arrière (5), au moins la griffe arrière (5) étant montée mobile dans une direction perpendiculaire à l'axe (2) de la pédale (1), et des moyens de commande (13, 14, 15, 16, 22) des moyens de fixation (4, 5), caractérisé en ce que lesdits moyens de commande (13, 14, 15, 16, 22) comprennent un circuit hydraulique intégré dans la pédale (1) et des organes de commande hydraulique (13, 22) disposés sur la pédale et actionnés par la platine (3).

2. Dispositif de fixation selon la revendication 1, caractérisé en ce que les organes de commande (13, 14, 15, 16, 22) comprennent un vérin principal (13) actionné par la face inférieure de la platine (3), le vérin principal étant relié à un réservoir de liquide hydraulique (19) par un conduit d'aspiration («c») d'une part et par un conduit de retour («d») d'autre part, le vérin principal (13) étant relié par conduit («b») à au moins un organe de commande de la fixation constitué par un vérin de serrage (17) de la griffe mobile (5), le conduit («b») comportant une dérivation («b''») débouchant dans un accumulateur de pression (20).

3. Dispositif de fixation selon la revendication 2, caractérisé en ce que le vérin principal (13) est en outre relié par un conduit («a») à un organe de commande de la fixation constitué par au moins un vérin d'accrochage (15) de la griffe mobile (5), le conduit («a») comportant une dérivation («a''») débouchant dans un accumulateur de pression (21) à précontrainte.

4. Dispositif de fixation selon la revendication 3, caractérisé en ce que la section du conduit («a») relié au vérin d'accrochage 14, 15) est plus importante que celle du conduit («b») relié au vérin de serrage (16, 17) afin de permettre au vérin d'accrochage (14, 15) d'être actionné en premier.

5. Dispositif de fixation selon l'une quelconque des revendications 2 à 4, caractérisé en ce que chaque conduit («a», «b», «c», «d») relié au vérin principal (13) comporte respectivement un clapet antiretour (18).

6. Dispositif de fixation selon l'une quelconque des revendications précédentes, caractérisé en ce qu'un organe de commande hydraulique (22) de la libération de la platine (3) est disposé sur la face supérieure de la pédale et actionné par un appendice latéral (3') de la pédale (3).

7. Dispositif de fixation selon la revendication 6, caractérisé en ce que l'organe de commande (22) de la libération de la platine (3) est constitué par un tiroir ayant une position ouverte et une position fermée, ce tiroir (22) étant relié à une dérivation («a'''») du conduit («a») relié au vérin d'accrochage (14, 15) et à une dérivation («b'''») du conduit («b») relié au vérin de serrage (16, 17) d'une part, et au réservoir (19) d'autre part afin de permettre, lorsqu'il est en position ouverte, d'établir la communication des desdits conduits («a», «b») avec le réservoir (19).

8. Dispositif de fixation selon l'une quelconque des revendication précédentes, caractérisé en ce que la griffe avant (4) est également montée mobile et commandée par des moyens hydrauliques (14, 16) analogues à ceux qui commandent la griffe arrière (5) et qui sont intégrés dans le même circuit hydraulique que ces derniers.

9. Dispositif de fixation selon l'une des revendications 2 à 8, caractérisé en ce que le conduit («b») reliant le vérin principal (13) au vérin ou aux vérins de serrage (16,17) est en outre relié au réservoir (19) par une dérivation («b''''») dans laquelle est inséré un étranglement (25).

10. Dispositif de fixation selon l'une des revendications précédentes, caractérisé en ce que la ou les griffes mobiles (4, 5) sont constamment sollicitées par des moyens élastiques (7) pour s'écarter l'une de l'autre.

11. Dispositif de fixation selon l'une des revendications 2 à 10, caractérisé en ce que la griffe mobile (4, 5) comporte un levier (4', 5') s'étendant sensiblement perpendiculairement au corps de la griffe et coopérant avec un ou deux vérins (14, 16 ; 15, 17) de commande du rapprochement des griffes (4, 5) l'une de l'autre en vue de la fixation de la platine (3) sur la pédale.

12. Dispositif de fixation selon l'une quelconque des revendications 2 à 10, caractérisé en ce que le vérin principal (13) est constitué par un dôme gonfleur en un matériau élastique.

13. Dispositif de fixation selon l'une quelconque des revendications 2 à 12, caractérisé en ce que les vérins constituant les organes de commande de la fixation sont constitués par des membranes.

14. Dispositif de fixation selon l'une quelconque des revendications précédentes, caractérisé en ce que le circuit hydraulique alimente en outre un palier hydrostatique dans lequel l'axe de pédale (2) est logé.

15. Dispositif de fixation selon la revendication 14, caractérisé en ce que le palier hydrostatique est inséré dans le conduit de retour («d») vers le réservoir.

16. Dispositif de fixation selon la revendication 13, caractérisé en ce qu'un accumulateur de pression (24) est connecté en amont du palier hydrostatique.

17. Dispositif de fixation selon la revendication 9 et 15 ou 16, caractérisé en ce que la dérivation («b''''») avec l'étranglement (25) est relié au palier hydrostatique.
